# EUROPEAN PATENT SPECIFICATION

(11) **EP 3 611 059 B1**
(45) Date of publication and mention of the grant of the patent: **03.08.2022**
(21) Application number: 19192120.4
(22) Date of filing: 16.08.2019
(51) Int. Cl.: B60R 19/48, F16B 9/00

(54) **PARKING ASSIST SENSOR HOLDER**
HALTER EINES EINPARKASSISTENZSENSORS
SUPPORT DE CAPTEUR D'AIDE AU STATIONNEMENT

(30) Priority: 18.08.2018 IN 201821030986
(43) Date of publication of application: 19.02.2020
(73) Proprietor: Illinois Tool Works, Inc., Glenview, Illinois 60025 (US)
(72) Inventor: Gokavi, Mahantesh, 412207 Pune (IN); Jadhav, Satish, 412207 Pune (IN); Namanna, Murali, 412207 Pune (IN)
(74) Representative: HGF

(56) References cited:
- EP-A1- 2 610 114
- EP-A1- 3 258 289
- WO-A1-2006/021072
- DE-A1- 19 621 964
- DE-A1- 19 939 747
- DE-A1-102011 105 051
- US-A1- 2008 117 080
- US-B1- 6 508 325

## Description

### BACKGROUND

With developments in automotive technology, automobiles are, typically, provided with facilities that allow the automobile as well as the occupants to be aware of surroundings, such as obstacles, object, and pedestrians in proximity of the automobile. Accordingly, on-board automotive systems may use such facilities for enhanced performance as well as safety of the automobile. One such facility may employ a sensor system to obtain information from a surrounding environment, for example, to alert a driver under certain circumstances, such as when the automobile is less than a predetermined distance from an object or obstacle. For instance, an automobile parking assistance system may include a parking assist sensor (PAS) to warn the driver if the automobile is approaching an object when being parked.

### BRIEF DESCRIPTION OF FIGURES

The detailed description is provided with reference to the accompanying figures. It should be noted that the description and the figures are merely examples of the present subject matter and are not meant to represent the subject matter itself.
Figure 1 illustrates a front view of a mounting component of an automobile having a parking assist sensor (PAS) assembly assembled therewith, according to an example of the present subject matter.
Figure 2 illustrates a perspective view of the PAS assembly in an assembled state, according to an example of the present subject matter.
Figure 3A, Figure 3B, and Figure 3C illustrates perspective views of a PAS holder of the PAS assembly, according to an example of the present subject matter.
Figure 4 illustrates a magnified view of the PAS holder, according to the present subject matter.
Figure 5 illustrates another perspective view of the PAS holder, according to an example of the present subject matter.

Throughout the drawings, identical reference numbers designate similar elements, but may not designate identical elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Amongst other safety facilities, automobiles may be provided with parking assistance systems as a safety feature to provide protection to pedestrians as well as the automobile from any impacts during parking of the automobile. For instance, a parking assist sensor (PAS) may be an ultrasonic sensor which are, generally, used in multiples and capable of determining a distance between the automobile and an object. Accordingly, the parking assistance system, using the PASs, can raise an alert for a driver of the automobile. The PASs may be deployed in a bumper, for instance, the rear and/or the front bumper, of the automobile, the PASs positioned in an area between the bumper and a chassis of the automobile. In other words, the PASs may be deployed on an inner surface of the bumper and only a sensing portion of the PASs may be exposed when viewed from a direction of an outer surface of the bumper.

In certain cases, a holder may be employed for mounting the PAS to the bumper. For instance, the holder may have a slot in which the PAS is fitted and a hole through which the sensing portion of the PAS is exposed. The holder is then mounted to the bumper, usually, by ultrasonic welding. The holders so used for mounting the PASs are manufactured to specifically follow the contour of the bumper. In other words, the holder for each PAS is designed to complement the shape of the portion of the bumper to which the PAS holder is to be mounted, so that the PAS holder can be easily mounted to the bumper.

Therefore, if four PAS are deployed as part of the parking assistance system, each of the holders for the four PAS may have to be designed and manufactured differently, in accordance with the shape of the portion of the bumper on which that PAS holder is to be mounted. Accordingly, manufacturing of such PAS holder may be costly as each different shape may involve a different tooling. In addition, the tolerances while manufacturing the PAS holders have to be strictly adhered to given the conformity with the shape of the portion of the bumper. Any deviation from the tolerances may render the manufactured PAS holders unusable. As a result, the manufacturing for such PAS holders may involve a considerable amount of wastage.

Approaches and aspects relating to a parking assist sensor (PAS) holder and a parking assist sensor (PAS) assembly are described. According to an aspect, the PAS holder is designed in a way that the same PAS holder can be accommodated at any position on a mounting component, such as a bumper, irrespective of a shape of the mounting component at that position. In addition, the PAS holder can be conveniently mounted to the mounting component without requiring any complicated procedures, such as ultrasonic welding.

In an example, the parking assist sensor (PAS) holder has a body portion which is provided with features for holding the PAS as well as the design features as mentioned previously. In one example, as part of the former, i.e., features for holding the PAS, the body portion includes a bracket to couple the PAS to it and an aperture for accommodating a sensing portion of the PAS. Further, as part of the latter, i.e., design features for adapting the PAS holder for use with any contour of the mounting component, the body portion includes one or more live hinges for providing flexibility to the body portion, so that the body portion can flex and bend to match a curvature of a mounting component, such as the bumper, for mounting the PAS.

In the invention, the live hinge is formed by reducing a material in the portion of the live hinge so that the live hinge has a lower cross-sectional thickness than a cross-sectional thickness of the body portion. Such a design achieves the flexibility of the PAS holder and at the same time reduces the cost of production of the PAS holder by reducing the material used for manufacturing thereon. The flexibility or bending ability of the PAS holder allows the PAS holder to conform to any shape of the mounting component to which the PAS is to be mounted.

In addition, the PAS holder can be provided with features to allow the PAS holder to be easily mounted to the mounting component. Accordingly, in one case, the body portion can have a mating surface which is adapted to mate with a complementary mating surface on the mounting component to couple the PAS holder to the mounting component. In said case, the mating surface can be provided with an adhesive to couple the PAS holder the mounting component. Therefore, in an example, PAS holder can be formed as a stick-on type component with an adhesive on the mating surface covered by a peel-able cover. For deploying, the peel-able cover can be removed and the PAS holder can be fixed to the mounting component. In addition, with the flexibility of the body portion of the PAS holder, the PAS holder is able to adequately bond with the mounting component using the adhesive. Accordingly, the assemblage of the PAS holder to the mounting component involves less time and is, therefore, productive.

In another case, the PAS holder can be coupled to the mounting component using another type of fastening mechanism. In said case, the body portion can be provided with a plurality of mounting holes, each of the mounting holes having a self-locking feature. In other words, the mounting holes can have a feature that can cooperate with a complementary locking feature on the mounting component to lock the PAS holder with the mounting component. In addition, the mounting holes can serve the purpose of locating the PAS holder with respect to the complementary locking feature on the mounting component, thereby making the assembly convenient and efficient.

The above aspects are further illustrated in the figures and described in the corresponding description below.

Additionally, the word "coupled" is used throughout for clarity of the description and may include either a direct connection or an indirect connection.

### DESCRIPTION OF FIGURES

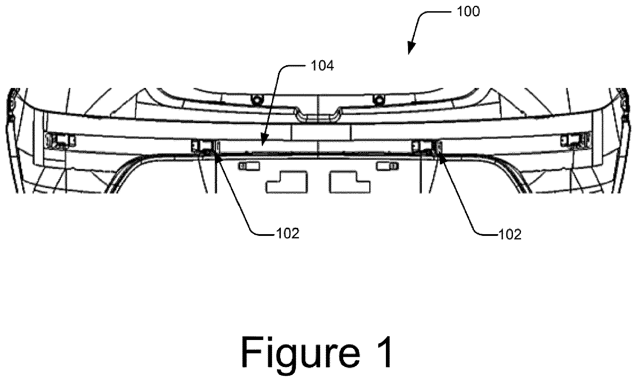

Figure 1 illustrates a front view of a mounting component 100 of an automobile having a parking assist sensor (PAS) assembly 102 assembled therewith, according to an example of the present subject matter. In said example, the mounting component 100 can be a bumper, such as a rear bumper or a front bumper, of the automobile. Accordingly, in said example, the PAS assembly 102 installed in a rear or a front bumper can provide inputs to an on-board parking assistance system to facilitate a driver of the automobile in parking the automobile. In other examples, however, the mounting component 100 can be any other part of the automobile where the PAS assembly 102 can be mounted for adequate operation for assisting the driver of the automobile.

As an example, Figure 1 shows an inner surface 104 of the mounting component 100, such as the bumper, in which the PAS assembly 102 is shown in the assembled condition. As illustrated in Figure 1, the mounting component 100 may have a plurality of PAS assemblies 102 mounted thereon for parking assistance facility. However, in another example, the mounting component 100 may have one PAS assembly 102 mounted thereon. In such a case, a single PAS assembly 102 may be adequate in providing the information to the on-board parking assistance system to achieve the operation. Further, as shown in the front view of the mounting component 100 of Figure 1, a portion of the PAS assembly 102 can

According to an aspect, the PAS assembly 102 can be designed in a way that the PAS assembly 102 can be mounted at any portion of the mounting component 100 having any contour or curvature. In other words, the PAS assembly 102 can be designed to conform to the shape of a portion of the mounting component 100 where the PAS assembly 102 is to be mounted, the portion referred to as mounting portion 206 hereinafter.

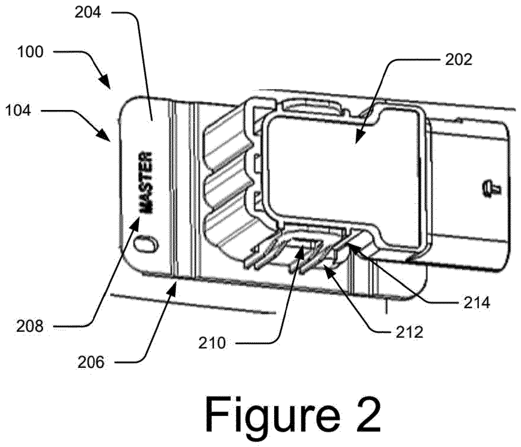

Figure 2 illustrates a perspective view of the PAS assembly 102 in an assembled state with the mounting component 100, according to an example of the present subject matter. As an example, Figure 2 illustrates the inner surface 104 of the mounting component 100 and the PAS assembly 102 mounted thereon. The PAS assembly 102 can include a parking assist sensor (PAS) 202 and a parking assist sensor (PAS) holder 204 to hold the PAS 202. the According to an aspect, the PAS assembly 102 can be provided with features to achieve three goals; firstly, features to secure the PAS 202; secondly, features to fix the PAS holder 204 to the mounting component 100; and third, features to adapt the PAS holder 204 to conform to the contours of the mounting portion 206 of the mounting component 100.

In said example, the PAS 202 can be any sensor known in the art and used for the purposes of the parking assistance systems in automobiles. In one example, the PAS 202 can be a proximity sensor to determine when an object is at a predefined distance from the vehicle, and raise an alert in response. For instance, the PAS 202 can be an ultrasonic sensor or an electromagnetic sensor for operating as the proximity sensor. In another example, the PAS 202 can be an imaging device, such as a camera, which provides live feed to the driver of the automobile to allow the driver to view the distance of the automobile from an object in the vicinity and, accordingly, maneuver the automobile, say while parking. In the above examples, the PAS 202 can have a sensing portion (not shown) that implements the ultrasonic, electromagnetic, or imaging technology, for instance, for sensing the proximity of the PAS 202, and therefore, the automobile, to an object.

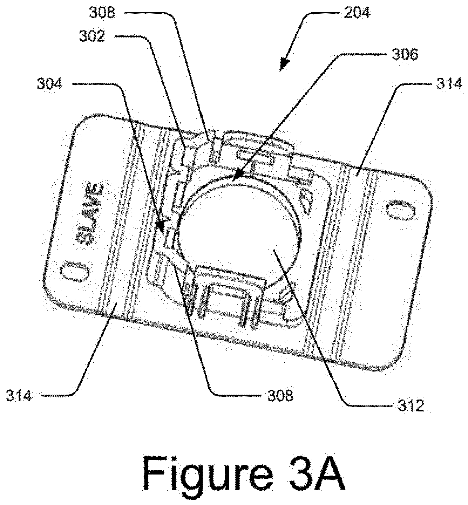

Further, as can be seen in Figure 2, the PAS holder 204 can be provided with features for coupling to the PAS 202. The PAS 202 can be have a body portion 208 which, in an example, may be provided with a fastener 210. Accordingly, the PAS holder 204 can be provided with one or more brackets 212 each having a complementary fastener 214 that complements the fastener 210 on the PAS 202. The number of fasteners 210 on the PAS 202 can be the same as the number of complementary fasteners 214, and accordingly, the number of brackets 212 can be provided on the PAS holder 204. The complementary fastener 214 can receive the fastener 210 of the PAS 202 to latch therewith. For instance, the fastener 210 can be a snap-fit lock whereas the complementary fastener 214 can be a slot to receive the snap-fit lock. In other cases, the fastener 210 and the complementary fastener 214 can be designed as other types of fasteners known in the art. Other features of the PAS holder 204 are explained with reference to Figure 3A to Figure 5.

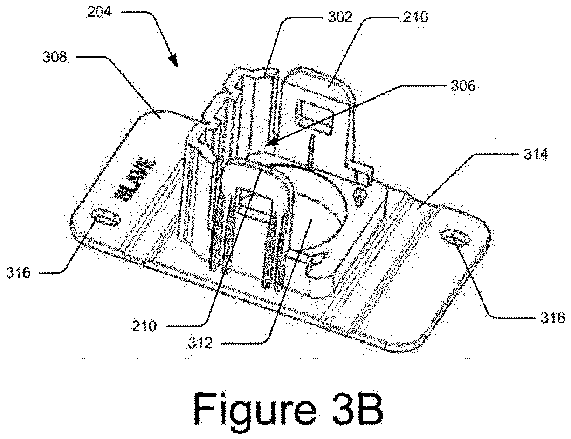

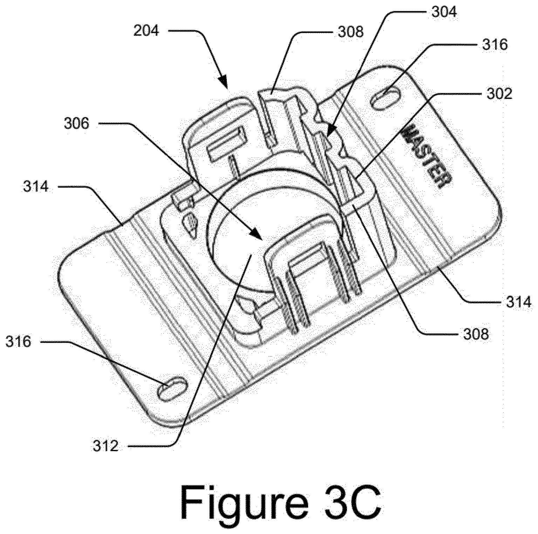

Figure 3A, Figure 3B, and Figure 3C illustrate various perspective views of the PAS holder 204, according to an example of the present subject matter. In an example, the PAS holder 204 can either be a master holder, i.e., designed for holding a master PAS, or can be a slave holder, i.e., designed for holding a slave PAS. While Figure 3A and Figure 3B illustrate the PAS holder 204 as a slave holder, Figure 3C illustrates the PAS holder 204 as a master holder. For the purposes of brevity and ease of understanding, Figure 3A, Figure 3B, and Figure 3C are described in conjunction with each other, in no particular order.

In addition to the brackets 212, to accommodate the PAS 202, the body portion 208 of the PAS holder 204 can be provided with a railing 302 having one or more grooves 304 that conform to the shape of the PAS 202 to accommodate the PAS 202. As shown in Figure 3A and Figure 3B in which the PAS holder 204 is designed as the slave holder as an example, a width of the grooves 304 of the railing 302 can be broad. Accordingly, a broad slot 306 is formed between the brackets 212 and the railing 302 in the PAS holder 204. The broad slot 306 can accommodate the slave sensor which is broader in construction than the master sensor. On the other hand, when the PAS holder 204 is formed as the master holder, as shown as an example, in Figure 3C, the width of the grooves 304 of the railing 302 can be narrower than the width in case of the PAS holder 204 formed as the slave holder. Therefore, the PAS holder 204 when formed as the master holder can include a narrow slot 306 for accommodating the narrowly constructed master sensor.

The difference in the construction of the railing 302 in case of the PAS holder 204 designed as the slave holder and incase of the PAS holder 204 designed as the master holder can be appreciated by reference to and comparison of Figure 3A or Figure 3B and Figure 3C. As can be seen in Figure 3A and Figure 3B, the railing 302 at both terminal edges 308 are formed as a being drawn towards a periphery of the two ends. In other words, the terminal edges of the railing 302 are beveled to have a broad width. On the other, in comparison, as shown in Figure 3C, one of the terminal edges 308 of the railing 302 is formed as being straight from a wall part 310 of the railing 302, while the other has a structure similar to that as shown in Figure 3A and Figure 3B, i.e. when the PAS holder 204 is the slave holder.

In addition, to accommodate the sensing portion of the PAS 202 so that the sensing portion is appropriately directed for adequate operation, the PAS holder 204 can further be provided with an aperture 312. The aperture 312 can be formed as having substantially the same shape as that of the sensing portion of the PAS 202, with due consideration to fitments and tolerances. In other cases, however, the aperture 312 can be shaped to accommodate the sensing portion of the PAS 202 in such a manner that the PAS 202 can operate in an effective manner. For instance, the aperture 312 can be shaped factoring in that the effectiveness or operability of the PAS 202 in terms of the sensing ability is not hindered.

Further, as mentioned previously, the PAS holder 204 is provided with features for allowing the PAS holder 204 to be able to match the shape and contours of the mounting portion 206 of the mounting component 100. Accordingly, in one aspect, the PAS holder 204 is provided with a live hinge 314. The live hinge 314 can be provided in the body portion 208 to impart flexibility to the PAS holder 204, in order for the body portion 208 to achieve the aforementioned purpose. In an example, the PAS holder 204 can be provided with more than one live hinge 314. For instance, in the example shown in Figure 3A, Figure 3B, and Figure 3C, the PAS holder 204 can be provided with two live hinges 314, one live hinge 314 on either side of the aperture 312.

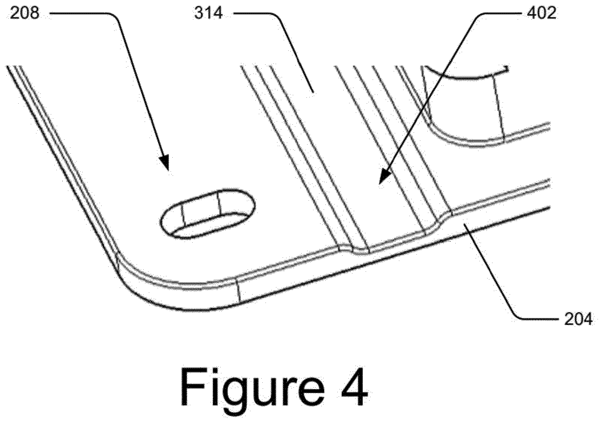

Figure 4 illustrates a close-up view of the live hinge 314 formed in the body portion 208 of the PAS holder 204, according to an example of the present subject matter. According to said example, to achieve a flexibility of the body portion 208 at the live hinge 314, the live hinge 314 can be formed by removing material from the body portion 208 at the location of the live hinge 314. Therefore, in said example, the live hinge 314 is formed by designing the body portion 208 to have a lower cross-sectional thickness at the point of forming the live hinge 314 than a cross-sectional thickness at the rest of the body portion 208. In other words, the live hinge 314 has a lower cross-sectional thickness in comparison to the body potion 208. Therefore, the live hinge 314 can be shaped as a depression 402 in the body portion 208. In other examples, the live hinge 314 can be designed in other ways, so as to achieve the function of having a flexible body portion 208 of the PAS holder 204 that can contour according to the contour of the mounting portion 206 of the mounting component 100.

In one example, the live hinge 314 can be provided in the body portion 208 along a major dimension of the body portion 208, such as a length, so as to provide maximum flexibility to the PAS holder 204. In other words, the location of the live hinge 314 is determined in the body portion 208, such that the live hinge 314 allows maximum flexibility of the body portion 208 along the major dimension of the PAS holder 204. Accordingly, the number of live hinges 314 that can be provided in the PAS holder 204 can be based on, for example, the contour of the mounting portion 206. For instance, if the mounting portion 206 has a large number of contours, then the PAS holder 204 can have a large number of live hinges 314 so that the PAS holder 204 can be flexible enough to match the contours of the mounting portion 206 and be used to adequately mount the PAS holder 204 to the mounting component 100.

In addition to conforming to the contours, the PAS holder 204 can be provided with features for coupling to the mounting component 100. Accordingly, in the example shown in Figures 3A, 3B, and 3C, the body portion 208 of the PAS holder 204 can have a plurality of mounting holes 316 to allow the PAS holder 204 to couple to the mounting component 100. According to an aspect, each mounting hole 316 can be designed to have a self-locking feature. In an example, as part of the self-locking feature, each mounting hole 316 can be designed to cooperate with a snap locking feature (not shown) on the mounting component 100. Accordingly, for assembly, the mounting hole 316 can create a snap-fit lock with the snap locking feature on the mounting component 100 for coupling the PAS holder 204 to the mounting component 100. In other example, other types of self-locking type fastening can be used.

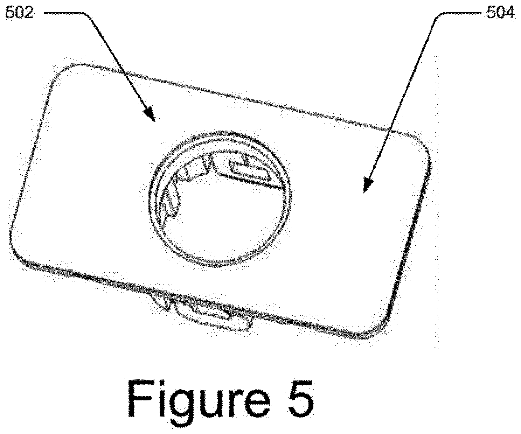

According to another example, the PAS holder 204 can be designed to be fixed to the mounting component 100 without the use of any additional fasteners. The other example of the PAS holder 204 is illustrated in Figure 5. Accordingly, in said example, the PAS holder 204 can have a mating surface 502 which can be used to couple the PAS holder 204 to the mounting component 100. The mating surface 502, in the example shown in Figure 5, can be the surface of the body portion 208 opposite to the surface on which the brackets 212 and the railing 302 is provided. As mentioned, the mating surface 502 can allow the PAS holder 502 to be coupled to the mounting component 100 without any fasteners. Accordingly, the mating surface 502 can have an adhesive 504 to couple the PAS holder 204 to the mounting component 100. In an example, the adhesive 504 can be an industrial-grade tape covered by a peel-able cover, provided on the entire mating surface 502. In another example, the adhesive 504 can be selectively provided on the mating surface 502 so that the PAS holder 204 can be fixed with adequate strength. With the PAS holder 204 designed as explained with reference to Figure 5, the manufacturing of the PAS holder s204 can be efficient as the PAS holder 204 does not require any fastening means, such as holes, thereby reducing one step in the manufacturing process. At the same time, the assembly of the PAS holder 204 also becomes efficient as the mounting of the PAS holder 204 can be done simply by removing the peel-able cover from the adhesive 504 and fixing the PAS holder 204 to the mounting component 100.

## Claims

1. A parking assist sensor (PAS) holder comprising:
a body portion comprising,
a bracket to couple a parking assist sensor (PAS) thereto;
an aperture for accommodating a sensing portion of the PAS; and
at least one live hinge for providing flexibility to the body portion to match a curvature of a mounting component for mounting the PAS, wherein the at least one live hinge has a lower cross-sectional thickness than a cross-sectional thickness of the rest of the body portion.

2. The PAS holder as claimed in claim 1, wherein the body portion comprises a mating surface to couple the PAS holder to the mounting component, the mating surface having an adhesive to adapt the body portion to couple to the mounting component.

3. The PAS holder as claimed in claim 1, wherein the body portion further comprises a plurality of mounting holes to adapt the PAS holder to couple to the mounting component, wherein each of the plurality of mounting holes has a self-locking feature.

4. The PAS assembly as claimed in claim 1, wherein the PAS holder is one of a master holder and a slave holder.

5. A parking assist sensor (PAS) assembly comprising:
a parking assist sensor (PAS) comprising a sensing portion, the PAS further having a fastener; and
a parking assist sensor (PAS) holder to hold the PAS, the PAS holder comprising a body portion comprising,
a bracket having a complementary fastener to latch with the fastener on the PAS;
an aperture for accommodating the sensing portion of the PAS; and
at least one live hinge for providing flexibility to the PAS holder to match a curvature of a mounting component, wherein the at least one live hinge has a lower cross-section thickness than a cross-sectional thickness of the rest of the body portion.

6. The PAS assembly as claimed in claim 5, wherein the body portion comprises a mating surface to couple the PAS holder to the mounting component, the mating surface having an adhesive to adapt the body portion to couple to the mounting component.

7. The PAS assembly as claimed in claim 5, wherein the body portion further comprises a plurality of mounting holes to adapt the PAS holder to couple to the mounting component, wherein each of the plurality of mounting holes has a self-locking feature.

8. The PAS assembly as claimed in claim 5, wherein the PAS holder is one of a master holder and a slave holder.

## Patentansprüche

1. Parkassistenzsensor(PAS)-Halter, aufweisend:
einen Körperabschnitt, aufweisend:
einen Bügel, um einen Parkassistenzsensor (PAS) damit zu koppeln;
eine Öffnung zur Aufnahme eines Erfassungsabschnitts des PAS; und
zumindest ein Filmscharnier zum Bereitstellen von Flexibilität für den Körperabschnitt, um sich an eine Krümmung einer Montagekomponente zum Befestigen des PAS anzupassen, wobei das zumindest eine Filmscharnier eine geringere Querschnittsdicke als eine Querschnittsdicke des Rests des Körperabschnitts hat.

2. PAS-Halter nach Anspruch 1, wobei der Körperabschnitt eine Passfläche zum Koppeln des PAS-Halters mit der Montagekomponente aufweist, wobei die Passfläche einen Klebstoff hat, um den Körperabschnitt zum Koppeln mit der Montagekomponente anzupassen.

3. PAS-Halter nach Anspruch 1, wobei der Körperabschnitt ferner eine Vielzahl von Montagelöchern aufweist, um den PAS-Halter zum Koppeln mit der Montagekomponente anzupassen, wobei jedes der Vielzahl von Montagelöchern ein Selbstverriegelungsmerkmal hat.

4. PAS-Anordnung nach Anspruch 1, wobei der PAS-Halter entweder ein übergeordneter Halter oder ein untergeordneter Halter ist.

5. Parkassistenzsensor(PAS)-Anordnung, aufweisend:
einen Parkassistenzsensor (PAS), der einen
Erfassungsabschnitt aufweist, wobei das PAS ferner ein Befestigungselement hat; und
einen Parkassistenzsensor(PAS)-Halter zum Halten des PAS,
wobei der PAS-Halter einen Körperabschnitt aufweist,
aufweisend:
einen Bügel mit einem komplementären Befestigungselement zur Verrastung mit dem Befestigungselement auf dem PAS;
eine Öffnung zur Aufnahme des Erfassungsabschnitts des PAS; und
zumindest ein Filmscharnier zum Bereitstellen von Flexibilität für den PAS-Halter, um sich an eine Krümmung einer Montagekomponente anzupassen, wobei das zumindest eine Filmscharnier eine geringere Querschnittsdicke als eine Querschnittsdicke des Rests des Körperabschnitts hat.

6. PAS-Anordnung nach Anspruch 5, wobei der Körperabschnitt eine Passfläche zum Koppeln des PAS-Halters mit der Montagekomponente aufweist, wobei die Passfläche einen Klebstoff hat, um den Körperabschnitt zum Koppeln mit der Montagekomponente anzupassen.

7. PAS-Anordnung nach Anspruch 5, wobei der Körperabschnitt ferner eine Vielzahl von Montagelöchern aufweist, um den PAS-Halter zum Koppeln mit der Montagekomponente anzupassen, wobei jedes der Vielzahl von Montagelöchern ein Selbstverriegelungsmerkmal hat.

8. PAS-Anordnung nach Anspruch 5, wobei der PAS-Halter entweder ein übergeordneter Halter oder ein untergeordneter Halter ist.

## Revendications

1. Support de capteur d'aide au stationnement (PAS) comprenant :
une partie de corps comprenant,
un support pour coupler un capteur d'assistance au stationnement (PAS) à celui-ci ;
une ouverture pour le logement d'une partie de détection du PAS ; et
au moins une charnière active pour la fourniture de flexibilité à la partie de corps pour correspondre à une courbure d'un élément de montage pour le montage du PAS,
dans lequel l'au moins une charnière active a une épaisseur en coupe transversale inférieure à une épaisseur en coupe transversale du reste de la partie de corps.

2. Support de PAS selon la revendication 1, dans lequel la partie de corps comprend une surface d'accouplement pour coupler le support de PAS à l'élément de montage, la surface d'accouplement ayant un adhésif pour adapter la partie de corps pour se coupler à l'élément de montage.

3. Support de PAS selon la revendication 1, dans lequel la partie de corps comprend en outre une pluralité de trous de montage pour adapter le support de PAS pour se coupler à l'élément de montage, dans lequel chacun parmi la pluralité de trous de montage a une caractéristique autobloquante.

4. Ensemble de PAS selon la revendication 1, dans lequel le support de PAS est l'un parmi un support principal et un support asservi.

5. Ensemble de capteur d'aide au stationnement (PAS) comprenant :
un capteur d'aide au stationnement (PAS) comprenant une partie de détection, le PAS ayant en outre un dispositif de fixation ; et
un support de capteur d'aide au stationnement (PAS) pour supporter le PAS, le support de PAS comprenant une partie de corps comprenant,
un support ayant un dispositif de fixation complémentaire pour se verrouiller avec le dispositif de fixation sur le PAS ;
une ouverture pour le logement de la partie de détection du PAS ; et
au moins une charnière active pour la fourniture de flexibilité au support de PAS pour correspondre à une courbure d'un élément de montage, dans lequel l'au moins une charnière active a une épaisseur en coupe transversale inférieure à une épaisseur en coupe transversale du reste de la partie de corps.

6. Ensemble de PAS selon la revendication 5, dans lequel la partie de corps comprend une surface d'accouplement pour coupler le support de PAS à l'élément de montage, la surface d'accouplement ayant un adhésif pour adapter la partie de corps pour se coupler à l'élément de montage.

7. Ensemble de PAS selon la revendication 5, dans lequel la partie de corps comprend en outre une pluralité de trous de montage pour adapter le support de PAS pour se coupler à l'élément de montage, dans lequel chacun parmi la pluralité de trous de montage a une caractéristique autobloquante.

8. Ensemble de PAS selon la revendication 5, dans lequel le support de PAS est l'un parmi un support principal et un support asservi.
